(19) **Europäisches Patentamt / European Patent Office / Office européen des brevets**

(11) **EP 4 538 938 A1**

(12) **EUROPEAN PATENT APPLICATION**

(43) Date of publication:
**16.04.2025 Bulletin 2025/16**

(21) Application number: **23202791.2**

(22) Date of filing: **10.10.2023**

(51) International Patent Classification (IPC):
**G06N 7/01** *(2023.01)* **G06N 20/00** *(2019.01)*
**G06N 5/022** *(2023.01)*

(52) Cooperative Patent Classification (CPC):
**G06N 7/01; G06N 20/00;** G06N 5/022

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ASML Netherlands B.V.**
**5500 AH Veldhoven (NL)**

(72) Inventors:
- **DOS SANTOS GUZELLA, Thiago**
  **Veldhoven (NL)**
- **MALAN, Abele, Millenium**
  **Veldhoven (NL)**
- **CHEN, Yiyu Lydia**
  **Veldhoven (NL)**
- **DECOUCHANT, Jérémie, Éric, Alphonse, Pierre**
  **Veldhoven (NL)**

(74) Representative: **ASML Netherlands B.V.**
**Corporate Intellectual Property**
**P.O. Box 324**
**5500 AH Veldhoven (NL)**

(54) **CONFIDENTIALITY-PRESERVING COLLABORATIVE MODEL FOR DERIVING INFORMATION ON A PRODUCTION SYSTEM**

(57)    A method is presented for using a distributed network to derive information characterising a production system described by variables. The network comprises two probabilistic models implementing a graph comprising nodes associated with a corresponding one of the variables, and directed edges connecting respective pairs of the nodes. Each graph comprises an interface node for which the corresponding associated variable is common and normal nodes to which edge(s) are directed that are associated with a respective conditional probability table (CPT) specifying a probability of the variable being in a set of states based on the variables associated with the corresponding one or more nodes from which the one or more edges are directed. The interface node is associated with a partial CPT of the common variable. The method comprises generating, using the at least two models, conditioned data specifying a probability distribution of the state of the common variable.

## Fig. 6

```
┌──────────────────────────────────────────┐
│  providing (at least) two probabilistic   │──── S601
│                  models                    │
└──────────────────────────────────────────┘
                     │
                     ▼
┌──────────────────────────────────────────┐
│    determining an interface node by        │──── S603
│  associating a node in each of the provided │
│    models for which the corresponding       │
│      variables meet a similarity criterion  │
└──────────────────────────────────────────┘
                     │
                     ▼
┌──────────────────────────────────────────┐
│   associating, for each of the at least two │──── S605
│   models, the interface node with a partial │
│          CPT of the common variable         │
└──────────────────────────────────────────┘
```

EP 4 538 938 A1

## Description

FIELD

The present invention relates to methods and systems for deriving information characterising a production system.

BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-$k_1$ lithography may be used to process features with dimensions smaller than the classical resolution limit of a lithographic apparatus. In such process, the resolution formula may be expressed as CD = $k_1 \times \lambda /$NA, where $\lambda$ is the wavelength of radiation employed, NA is the numerical aperture of the projection optics in the lithographic apparatus, CD is the "critical dimension" (generally the smallest feature size printed, but in this case half-pitch) and $k_1$ is an empirical resolution factor. In general, the smaller $k_1$ the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

The production of semiconductor products involves highly complex processes which typically include a long series of steps using a variety of production machines (e.g. lithography scanners, etchers, deposition tools, etc.). The machines need to be carefully controlled to ensure that the resulting products are correctly manufactured. An error in one of the process steps (for example because of a defective or an incorrectly operated machine) can result in defective (i.e. non-working) products. In such a case it is desirable to identify the cause of the problem quickly and reliably to minimise any downtime of the production process.

Further, even when no problem is detected, it is often desirable to accurately determine the current state (of specific components) of the production system, for example to perform predictive maintenance. However, due to the complexity of semiconductor production processes, obtaining diagnostic information (such as the root-cause of an observed problem) is often a difficult task. Hence there is a continued need to provide improved methods for modelling production processes and for performing root-cause analysis.

SUMMARY

The present invention aims to provide new and useful methods for providing and using a distributed prediction network to derive information characterising a production system described by a plurality of variables. This information may specify a cause (in particular a root-cause) of an observed problem of the production system. In other words, the network described in this specification provides an improved diagnostic system for performing root-cause analysis or general fault diagnosis of a production system (such as a semiconductor production system).

In broad terms, the present invention proposes a peer-to-peer prediction network that enables multiple parties to cooperate in a privacy preserving manner to improve the prediction accuracy of the network. More specifically, the prediction network enables each of the parties to benefit from the expertise and data available to the other parties without requiring any party to make their expertise or data available to any other party. One way of implementing this is for the parties to compute (based on respectively available expertise and data) "intermediate data" (i.e. intermediate inference results which do not directly correspond to the desired "final" prediction) in such a way that the intermediate data i) is useful to another party during inference (i.e. when deriving information characterising a production system) but ii) does not allow the other party to infer (or reconstruct) any of the expertise and data. The so-computed intermediate data can then be shared with other parties without disclosing any private or confidential information to the other parties. A party receiving the intermediate data can in turn use this data to derive information characterising the production system with an improved accuracy.

According to a first aspect, there is provided a computer-implemented method of using a distributed prediction network to derive information characterising a production system described by a plurality of variables. The prediction network comprises at least two probabilistic models (e.g. Bayesian networks). Each model may be controlled by a different party, and the at least two probabilistic models may be implemented on the same, or on different computing devices which are in communication with other over a network (e.g. the parties may operate from the same production plant). Each model implements a respective graph (e.g. a directed acyclic graph). Each graph comprises a plurality of nodes which are each associated with a corresponding one of the variables, and a plurality of directed edges connecting respective pairs of the nodes. Each plurality of nodes comprises an interface node which is a node for which the corresponding associated variable is a "common variable" that is common to both models. The nodes of each plurality of nodes other than the interface node are designated "normal" nodes. Each normal node to which one or more edges are directed is associated with a respective conditional probability table (CPT) specifying a probability of the respective variable being in one of a respective set of states based on the variables associated with the corresponding one or more nodes from which the one or more edges are directed. The interface node is associated with a partial CPT of the common variable (it is to be understood that the term "partial CPT" indicates that the first and second party have (at least partially) different information with respect to the corresponding common variable, i.e. the term does not mean that the CPT is incomplete in a way that makes (independent) inference of the first or second model impossible). The method comprises each model using the partial CPT in the model of the common variable to derive "conditioned data" for the common variable, e.g. by multiplying the partial CPT by the states of nodes of the model (e.g. node(s) of the model which are child nodes in the model to the interface node; these may be nodes for which the state is known from the observation data, nodes having a derived state, and/or, in the case of some interface nodes, other interface nodes for which a probability distribution of the corresponding common variable was derived previously). The conditioned data for the common variable generated by the at least two models collectively specifies a probability distribution of the state of the common variable.

The inventors have found that the provision of the conditioned data (respectively derived by each model based on the respective partial CPT, e.g. by performing local inference for the respective interface node) is advantageous since the conditioned data represents useful intermediate data (i.e. intermediate inference results) which encodes knowledge and data associated with the respective model in a desirable way. In particular, the conditioned data enables the parties to improve their inference results based on the knowledge and data of all models without requiring the parties to share anything other than the conditioned data (i.e. in particular the parties do not need to give each other access to potentially confidential data). Since the conditioned data encodes both knowledge and data of a particular model, other parties cannot decode received conditioned data to infer any specifics of the knowledge or data of any other party. The prediction network of the first aspect improves therefore the privacy protection of the individual parties. In other words, sharing of intermediate inference results (i.e. the conditioned data) allow the parties to reconstruct the final prediction outcome of the query as if the parties had explicit access to the knowledge and data of the other parties, but without granting that explicit access.

In some implementations, the method may further comprise: (i) selecting, as a target variable, a variable of a first model of the at least two models and, as target state, a state of the selected variable (e.g. the target variable may specify a root-cause of an anomaly in a production process performed by the production system, such as a particular defect of the production system), (ii) querying, by the first model, the other or others of the at least two models for conditioned data for the common variable, and (iii) determining, by the first model, based on the conditioned data queried from the other or others of the at least two models and the conditioned data in the first model for the common variable, a probability of the target variable being in the target state.

This means that the first model can determine the probability of the target variable being in the target state not only based on knowledge and data available to the first model but also based on knowledge and data available to the other model(s) without compromising the privacy of the knowledge and data associated with the other model(s). This enables for example privacy-preserving, multi-party inference for improved root-cause analysis.

In some implementations, determining a probability of the target variable being in the target state may comprises the first model performing a (e.g. element-wise) multiplication of the conditioned data for each of the models (in the case that there are more than two models, the conditioned data for each of the models sharing the common variable). Equivalently this is the product of the conditioned data received from the other models for the common variable, the partial CPT of the first model for the common variable, and the state of one or more other nodes of the first model (e.g. the child nodes). This process can obtain the probability distribution of the state of the common variable. In any case, the probability of the target variable being in the target state may be determined based on a result of the multiplication.

In some implementations, each model using the partial CPT in the model to derive conditioned data for the common variable may comprise the other or others of the at least two models model deriving, based on observation data (e.g. obtained from measurements performed on a (defective) product fabricated by the production system) which specifies a state of the variable for at least one of the nodes (this at least one node may not be/comprise the node associated with the target variable), a state for the respective variable for one or more other nodes (e.g. one or more other normal nodes) of the other or others of the at least two models model (e.g. each model may use different observation data to derive the state for the respective variables because each model may have different observation data available to them), and using at least one of the derived states for the respective model and the partial CPT in the respective model of the common variable to derive the conditioned data for the common variable.

In some implementations, deriving a state for the respective variable for one or more other nodes of the other or others of the at least two models may comprise providing, by the first model, a data key to the other or others of the at least two models, selecting, by the other or others of the at least two models, the observation data specifying a state of the variable for at least one of the nodes based on the data key and based on the selected observation data, deriving a state for the respective variable for one or more other nodes of the first model. The data key may specify a product manufactured by the production system (e.g. the data key may directly specify a batch or serial number identifying a particular product manufactured by the production system, or the data key may specify an entry in a distributed database which stores corresponding information that the product).

The provision of data keys allows the other(s) of the at least two models to identify (the most) relevant observation data. Thus, this improves the usefulness of the conditioned data derived by these models.

In some implementations, each model using the partial CPT in the model to derive conditioned data for the common variable may further comprise the first model deriving, based on observation data (i.e. observation data available to the first model, and, for example, obtained from measurements performed on a (defective) product fabricated by the production system), which specifies a state of the variable for at least one of the nodes, a state for the respective variable for one or more other nodes of the first model (e.g. one or more other normal nodes), and using at least one of the derived states for the first model and the partial CPT in the first model of the common variable to derive the conditioned data for the common variable.

In some implementations, the method may further comprise defining, by the other or others of the at least two models, respective access rules. The respective access rules may specify a node of the respective other or others of the at least two models that the first model is allowed to query to obtain query data comprising conditioned data for the variable associated with the node specified in the access rules (this conditioned data may be derived by the respective model by performing local inference, e.g. using respective observation data). The first model may query the node specified in the access rules, and determine the probability of the target variable being in the target state (also) based on the query data (e.g. based on the conditioned data for each of the models for the common variable and the query data; this means that the first model can use the query data to improve the prediction of the target variable).

The access rules enable each party to give selected parties controlled access to (a portion) of their model. This increases the flexibility with which the parties can control/adjust the privacy of their knowledge and data. Being able to query a node of another party also means that the "inquiring" party can perform analyses that are otherwise not possible, and which are not possible in existing inference systems.

In some implementations, the production system may comprise a lithographic apparatus for patterning a semiconductor substrate. The observation data may comprise inspection data of a semiconductor substrate patterned by the lithographic apparatus. The inspection data may comprise measurements, e.g. overlay measurements, critical dimension measurements, alignment measurements, leveling measurements. Additionally or alternatively, the inspection data may comprise machine calibration data indicative of a calibration of the lithographic apparatus. The machine calibration data may be obtained by performing a corresponding calibration process (such a calibration process may be performed regularly or on an ad hoc basis).

According to a second aspect, there is provided a computer-implemented method of providing a distributed prediction network for implementing the methods of the first aspect. The method comprises (i) providing at least two probabilistic models, wherein each model implements a respective graph, each graph comprises a plurality of nodes associated with corresponding variables, and a plurality of directed edges connecting respective pairs of the nodes, for each of the directed edges, the corresponding node from which the edge is directed is designated a parent node and the corresponding node to which the edge is directed is designated a child node, and each child node is associated with a respective conditional probability distribution (CPT) specifying a probability of the respective variable being in one of a respective set of states based on the variables associated with the one or more corresponding parent nodes, (ii) determining (e.g. using a private set intersection process) an interface node by associating a node in each of the at least two models for which the corresponding variables meet a similarity criterion, and (iii) associating, for each of the at least two models, the interface node with a partial CPT of the common variable so that the partial CPTs of the common variable in the at least two models collectively specify a probability distribution of the state of the common variable.

In some implementations, associating, for each of the at least two models, the interface node with a partial CPT of the common variable may comprise for each of the at least two models, performing, for the interface node, element-wise factorisation of a respective CPT to determine for each element corresponding at least two factorisation values, for each of the at least two models, providing to each of the other models of the at least two models, for the interface node, a respective factorisation value of the corresponding at least factorisation values, and for each of the at least two models, generating for the interface node a partial CPT of the common variable based on the provided factorisation values.

In some implementations, the method further may comprise providing at least one additional node to one or more of the at least two models so that the parent nodes of the interface node in each model are respectively associated with the same variables. Identifiers specifying a definition of the variable and the corresponding set of states associated with the at least one additional node, may be masked by applying a masking operation to the corresponding unmasked identifiers.

Providing the additional nodes without parent nodes and with masked identifiers further reduces the amount of information shared between the models and improves therefore the privacy of models.

In some implementations, performing element-wise factorisation of a respective CPT to determine for each element corresponding at least two factorisation values may comprise

restructuring the CPT of the interface node based on the at least one additional node, using a homomorphic encryption method to determine, based on the CPTs of the interface node, a normalisation factor for each combination of states of the parent nodes of the interface node, applying the normalisation factors to the CPTs of the interface node, and for each normalised CPT, performing element-wise factorisation to determine for each element the corresponding at least two factorisation values.

The use of a homomorphic encryption method allow the parties to compute the normalisation factors without disclosing the initial CPTs of the interface node.

According to a third aspect, there is provided a computing system comprising one or more processors configured to implement the method according to the first or second aspect.

According to a fourth aspect, there is provided a computer readable medium comprising executable instructions that, when executed by a processor, cause the processor to implement the method according to the first or second aspect.

BRIEF DESCRIPTION OF THE DRAWINGS

Embodiments of the invention will now be described, by way of example only, with reference to the accompanying schematic drawings, in which:

- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts two probabilistic models;
- Figure 5 depicts a comparative example model combining the models of Figure 4;
- Figures 6 is a flow diagram illustrating an example method of synchronising the models of Figure 4;
- Figures 7 is a flow diagram illustrating an example method of synchronising interface nodes;
- Figure 8 depicts a distributed prediction network according to an embodiment;
- Figures 9A and 9B depict example probability tables modified during the process of Figure 7;
- Figure 10 is a flow diagram illustrating an example method of using the distributed prediction network of Figure 8 to perform a part of a root-cause analysis.

DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

<Reticle>

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

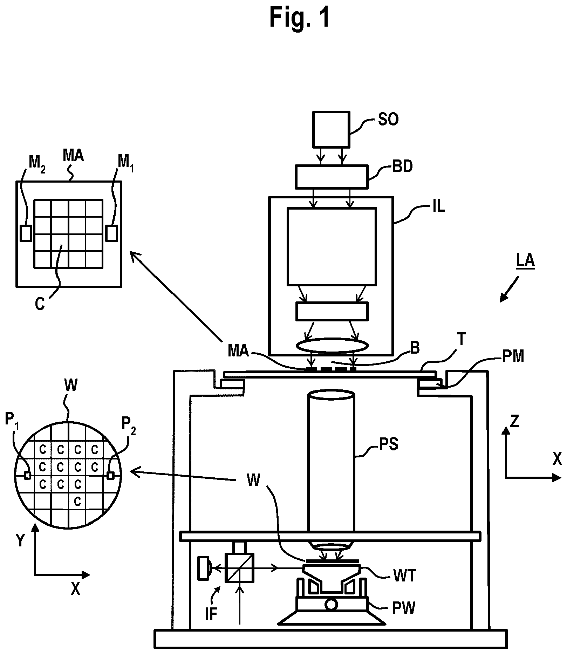

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks P1, P2. Although the substrate alignment marks P1, P2 as illustrated occupy dedicated target portions, they may be located in spaces between target portions. Substrate alignment marks P1, P2 are known as scribe-lane alignment marks when these are located between the target portions C.

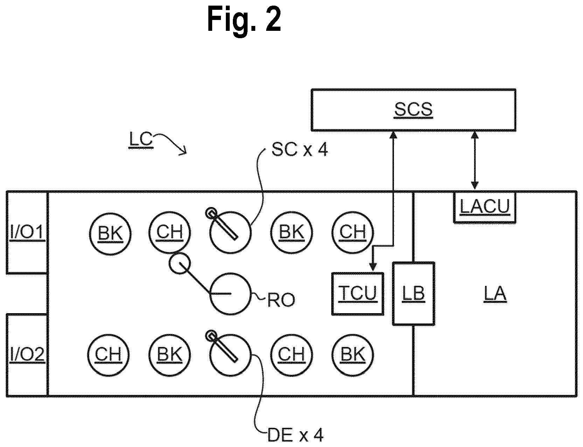

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

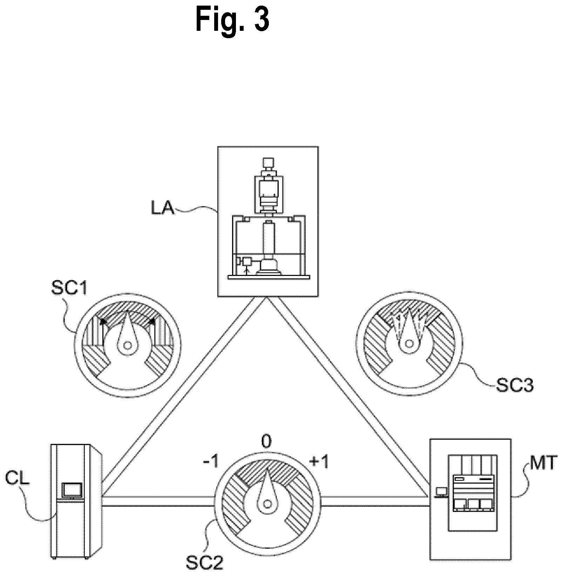

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

As described above, processes for manufacturing semiconductor products involve highly complex processes and machines. Occasionally the manufactured products are of low or insufficient quality (e.g. defective). This can be caused by a defect in one of the involved machines. In response to detecting such an undesired variation in the production process, a "root-cause analysis" is typically performed which aims to identify the underlying reason for the problematic products (e.g. by identifying that a specific component of a specific machine is worn out and needs replacing). Until the root-cause is found and corrected, the production process may be stopped which reduces the overall productivity of the semiconductor fabrication plant. It is therefore desirable to efficiently and reliably identify the root-cause when a problem occurs. Because of the complexity of semiconductor production processes (i.e. the number of possible issues and defects is typically very high), mathematical models may be used to perform a root-cause analysis, or more generally to obtain diagnostic information describing a current state of the production system.

In addition to the complexity of the involved processes, root-cause analysis of semiconductor production processes is further complicated by the number of "parties" (or entities) involved. For example, a semiconductor production process may involve an "operator party" (operating a semiconductor fabrication plant) and multiple "equipment vendor parties" (manufacturing/providing tools/machines that the operator party uses in the semiconductor fabrication plant to perform the production process). In this case, each party may have access to information which is useful for accurately modelling the entire production system but which they do not (want to) share with the other parties (e.g. information confidential to the respective party). In other words, the parties have information/knowledge on different (e.g. overlapping) parts of the production system, and want to keep their information/knowledge confidential. For example, the operator party may have knowledge about the production process (e.g. the individual steps of the production process, process parameters, and the like) and about the target architecture/design of the product that is being manufactured. The equipment vendor parties may have detailed knowledge about the inner-working of the tools/machines that they provide to the operator party. The operator party may have measurement data that shows confidential design details of the product and may therefore refrain from sharing such measurement data with the equipment vendor party. In this case, the equipment vendor party cannot use the operator's measurement data when performing a root-cause analysis (or performing other inquiries into the current state of the production system).

Conventional models for root-cause analysis do not however take into account the aforementioned privacy requirements of the involved parties. Conventionally, a production process is modelled as a set of modules that work together, with interface(s) that allow the output/outcome of each module to combine with that from another. This modular structure is also motivated by the fact that expertise is typically localised, i.e. a particular expert may have expertise relating to only one module and thus may create and contribute only to the relevant module. Models for root-cause analysis of production processes are often selected to reflect the modularity of the models used to describe the production process. For example, Bayesian networks are commonly used for root-cause analysis. A Bayesian Network is an interpretable, probabilistic graphical model based on a directed acyclic graph (DAG). The graph includes nodes and directed edges which connect respective pairs of the nodes. A node from which an edge is directed is referred to as a parent node and the corresponding node to which the edge is directed is referred as a child node. Each child node of the graph contains a conditional probability table (CPT) specifying the probability of each state given the different state combinations of the node's parents.

Bayesian networks allow combining domain knowledge and data in a convenient way. Domain knowledge can be incorporated into the model via the structure of the network (e.g. which nodes influence which other nodes, as indicated by directed edges), while data (for example measurements) can be incorporated into the model via the (conditional) probability tables (or in the in the form of observations that specify a particular state of a particular node). The structure (DAG topology) and parameters (CPT definitions) in such a Bayesian network can be defined in a manual (e.g. by a human expert), data-driven (e.g. using algorithms to learn from a set of samples) or hybrid way (e.g. human experts define the structure, algorithms define the parameters).

A Bayesian network may be created and used by a single party (e.g. by an engineer of the equipment vendor party) or collectively by multiple parties. In the multi-party case, a global network may be obtained by combining information from local networks defined by each party (this combination of information can be human-assisted or fully automated, e.g. using conventional Bayesian network combination algorithms). This requires however that the entire model is globally visible to at least one party, e.g. the equipment vendor party. As a further consequence, analysis has to be performed in a central location (i.e. where the global network is stored). In other words, the knowledge of all parties is shared and stored in a single place, and hence such a conventional global Bayesian network does not protect the information belonging to the involved parties.

The present disclosure proposes a distributed prediction network for deriving (diagnostic) information characterising a production system (e.g. for determining a root-cause for defectively manufactured products). The proposed distributed prediction network overcomes at least some of the aforementioned issues of conventional methods. In broad terms, the proposed distributed prediction network is a peer-to-peer network of probabilistic models (each controlled by a respective party) that enables each party to benefit from the expertise and/or data available to the other parties without having direct access to the (potentially confidential) information held by the other parties. Thus, the distributed prediction network provides confidentiality with respect to the domain knowledge and the measurement data belonging to each party.

More specifically, each party can perform probabilistic inference to derive information characterising a production system (e.g. to determine a probability that a component of the production system is defective, to determine a probability that a particular issue of a production system has been caused by particular cause, or other causal inquiries). As described in detail below, during inference the inquiring party (i.e. the party performing the inference) may receive from the other parties (e.g. in response to corresponding queries) intermediate data. This intermediate data is obfuscated (e.g. by masking) so as to not reveal any domain knowledge or measurement data to the inquiring party while still allowing the inquiring party to combine the received data with the local model to improve the locally obtained inference result. Since the party performing the inference receives intermediate data from the other parties, the inference process may be referred to as "distributed inference".

Further, the proposed distributed prediction network enables the inquiring party to provide data keys to (some of) other parties which allow identification of the product/data instances (e.g. a specific wafer) whose measurements are to be considered during inference. Thus, when generating the intermediate data for the distributed inference, a party can add extra evidence (e.g. corresponding to observations available only to that party) without disclosing the precise evidence to the other parties. Moreover, the proposed distributed prediction network enables the use of access rules which allow a party selectively share information with the other parties, e.g. to give (selected) other parties access to particular variables (and their states) in non-obfuscated form.

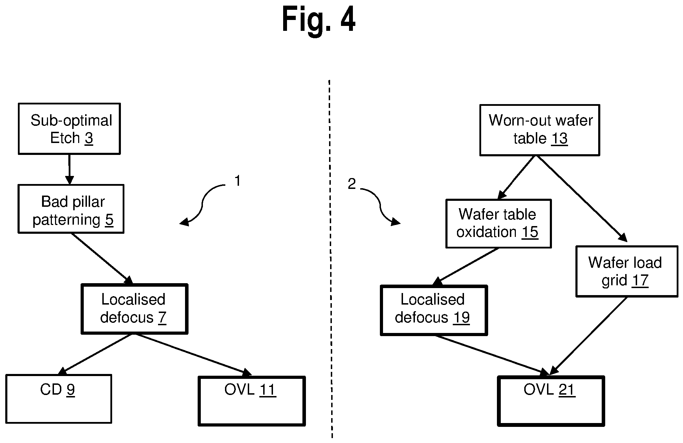

With reference to Figures 4 to 10, the creation and use of a distributed prediction network for deriving information characterising a production system is described. The production system is described by a plurality of variables. For the sake of simplicity, the embodiment of Figures 4 to 10 considers only two parties (for example, an operator party operating the production system to perform a production process to manufacture a particular product, and an equipment vendor party that provides tools/machines used in the production system). It is to be understood that in other embodiments, the distributed prediction network may comprise more than two parties. It is also to be understood that the embodiment of Figures 4 to 10 is a simple example and that, in practice, the proposed prediction distributed network may comprise a much larger number of variables than shown in the embodiment of Figures 4 to 10 (e.g. the proposed distributed prediction network may typically be implemented comprising more than 100 variables).

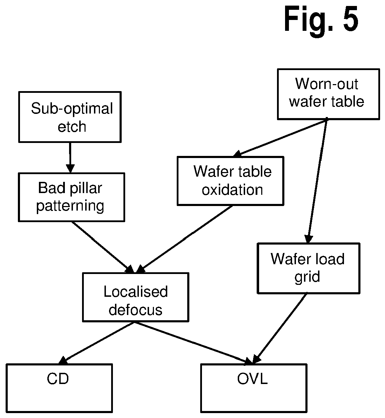

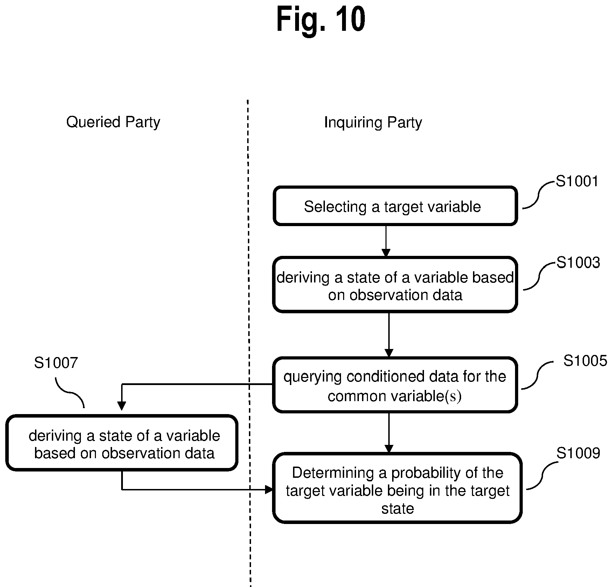

Figure 4 depicts a first probabilistic model 1 and a second Bayesian network 2. The "synchronization" of the two models 1, 2 into a distributed prediction network is described with reference to Figure 5 to 9B. Figure 10 describes the use of the so-formed distributed prediction network.

Initially, two parties (referred to as "operator party" and "equipment vendor party" in the following) respectively create the first and the second models 1, 2 as shown in Figure 4 (i.e. the two parties create the model 1, 2 largely independently of each other). Each model 1, 2 is a Bayesian network that models a joint probability distribution over a different subset of the plurality of variables that describe a particular semiconductor production system comprising a lithographic apparatus for patterning a semiconductor substrate. More specifically, each model 1, 2 implements a respective graph that comprises a plurality of nodes and a plurality of directed edges connecting respective pairs of the nodes. Each node may be associated with a variable of the respective set. Each node that is not a child node may be associated with a probability distribution specifying a probability of the respective variable being in one of a respective set of states. Each child node may be associated with a respective conditional probability table (CPT) specifying a probability of the respective variable being in one of a respective set of states based on the variable(s) associated with the corresponding parent node(s).

In general, the set of states of each variable may be selected as appropriate. For example, a variable can have a set of states that comprise a large number of states where each state represents a numerical value (or a range of numerical values) that the variable can take. As another example, a variable indicating the presence or absence of a particular property of the production system may be binary (i.e. may have only two possible states). As further examples, a variable may indicate a severity/quality of a particular property (e.g. low, intermediate, high), or may represent a numericallyvalued concept that is discretised into such a discrete-valued concept.

As mentioned above, the first and the second models 1, 2 are typically created and operated by different parties. The first model 1 may be generated by the operator party based on the domain knowledge and data available to the operator party. For example, model 1 may be created by a skilled engineer of the operator party based on the engineer's experience and expectation of related causes and effects. Similarly, the second model 2 may be generated by the equipment vendor party based on the domain knowledge and data available to the equipment vednor party. Since the parties usually have expertise in different aspects of the production process, and different data available, the graphs implemented by the (locally generated) models 1, 2 may not be identical. In particular, the respective sets of variables modelled by models 1, 2 are generally overlapping but not identical, e.g. the first model 1 comprises some nodes that are comprised in the second model 2 and other nodes that are not comprised in the second model 2 (and vice versa).

For example, an expert of the operator party (creating the first model 1) may have expertise in a non-scanner (i.e. non-lithographic) part of the production system, and may know that a suboptimal etching step can be considered a root-cause for some problems that the production system can have. This is because a sub-

optimal etch can cause inadequate patterning of so-called pillar structures which in turn can cause a localised defocus. A localised defocus in turn may affect overlay (OVL), and critical dimension (CD) values of the patterned substrate. Consequently, the first model 1 comprises a corresponding "sub-optimal etch" node 3. Since the node 3 is associated with a root-cause, node 3 does not have a parent node. Node 3 comprises a probability table specifying a respective probability for each possible state of the corresponding "sub-optimal etch" variable.

Node 3 is a parent node to "bad pillar patterning" node 5 (since a suboptimal etch can cause inadequate patterning of so-called pillar structures). Thus, node 5 comprises a CPT specifying the probability of the "bad pillar patterning" variable being in a particular state depending on the state of the "sub-optimal etch" variable. Similarly, node 5 is parent node to node 7, and node 7 comprises a respective CPT. Since the "localised defocus" variable affects both CD and OVL values, node 7 is a parent node to both CD node 9 and OVL node 11. The CD and OVL nodes 9, 11 represent variables that can be directly obtained from measurements of a substrate that has been patterned by the production system (e.g. a particular wafer). Nodes 9 and 11 may therefore also be referred to as "evidence" or "effect" nodes. The other nodes (i.e. non-evidence nodes) may be referred to as "cause" nodes. Thus, as described below in detail, during inference, measurement data ("observation data") may be used to "fix" the variables of the corresponding evidence node(s) (and to obtain updated probability tables for the cause nodes of the model).

Turning to the second model 2, an expert of the equipment vendor party (creating the second model 2) may have expertise in the scanner-part of the lithographic apparatus. In particular, the expert may the aware that a worn-out wafer table is a root-cause for some problems that the production system can have since a worn-out wafer table can cause wafer table oxidation and wafer load grid. Further, wafer table oxidation and wafer load grid can each affect OVL values. Consequently, the expert of the equipment vendor party may configure model 2, as shown in Figure 4, comprising, as a root-cause node, a "worn-out wafer table" node 13. Since node 13 is a root-cause node, node 13 comprises a probability table specifying the probabilities of the "worn-out wafer table" variable to be in the respective states. Further, node 13 is a parent node to both a "wafer table oxidation" node 15 and a "wafer load grid" node 17. Node 15 is a parent node to a "localised defocus" node 19. Both "localised defocus" node 19 and "wafer load grid" node 17 are parent nodes to an OVL node 21. Since nodes 15, 17, 19 and 21 are child nodes, each of these nodes comprises a respective CPT.

Thus, in broad terms, although the two parties model the same production system, their respectively created example models 1, 2 of Figure 4 differ in some aspects. For example, both parties identified different root-cause variables. A conventional way of enabling each party to benefit from the expertise of the other party is to form a "global" model by combining the models 1, 2, and available to both the parties. Such a conventional global model is shown in Figure 5. It is created by the parties sharing their CPT data, and used by the parties sharing their observation data. As discussed above, a problem of such a global model is that each party obtains access to information belonging to the other party (e.g. which nodes are provided, causal relationships between nodes, probability tables, and so on). This problem can be overcome by forming a distributed prediction network.

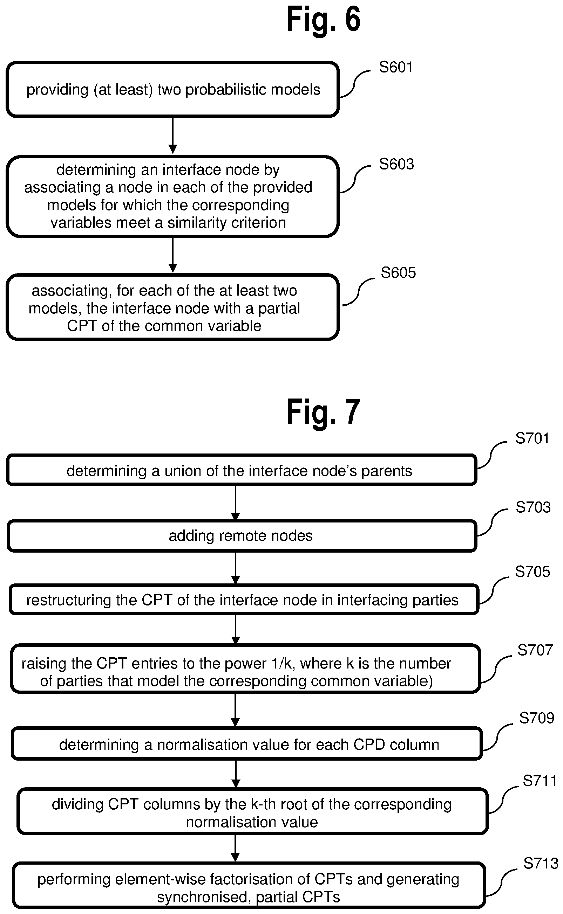

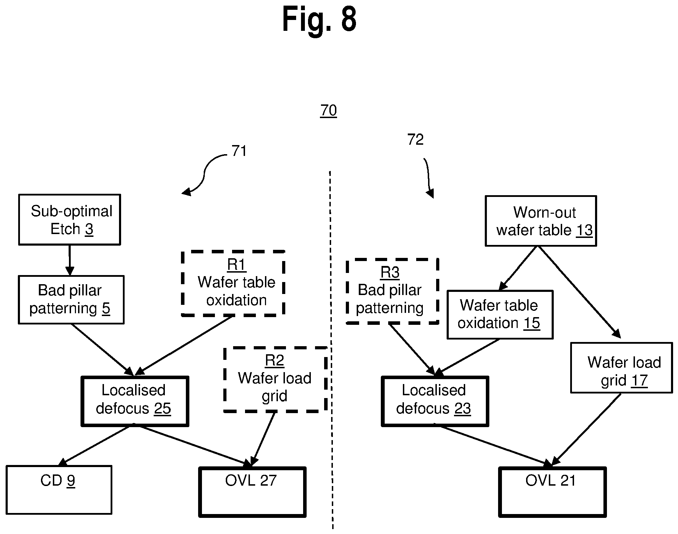

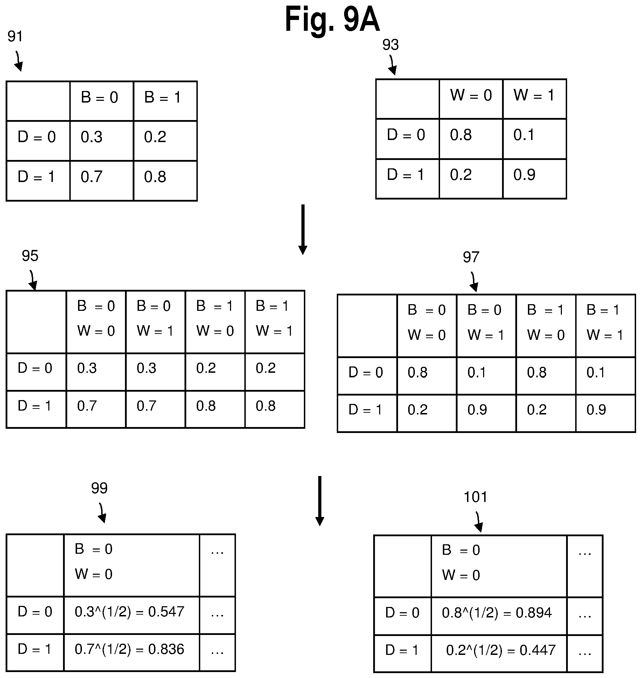

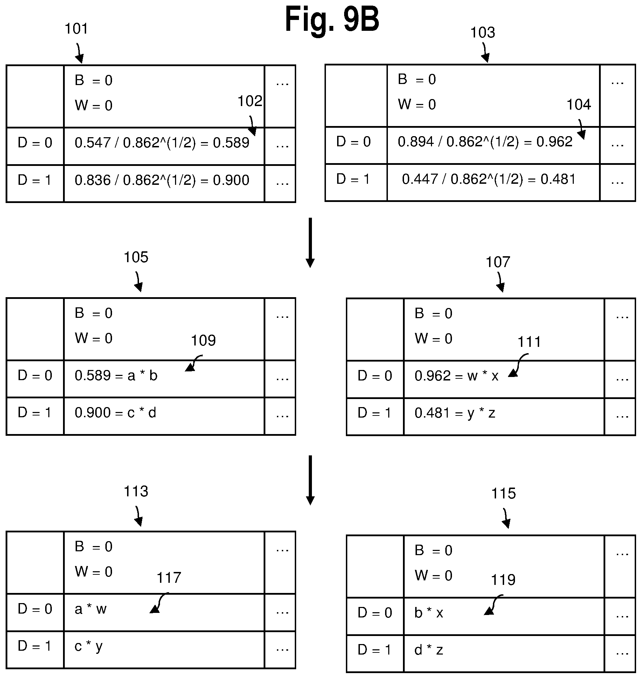

With reference to Figures 6 to 9B, an example process of providing a distributed prediction network to derive information characterising a production system is described. This process may also be referred to as "synchronisation" of the two models 1, 2 since this process comprises steps of modifying some nodes and CPTs of one model based on nodes and CPTs of the other model so that the so-modified models can cooperatively perform distributed inference while preserving the confidentiality of their data/knowledge. Figures 6 and 7 are flow diagrams illustrating the synchronisation process. Figure 8 shows the so-synchronised networks which cooperatively form the distributed prediction network. Figures 9A and 9B depict example CPTs as modified during the process of Figure 7.

Referring to Figure 6, in an initial step S601, the two probabilistic models 1, 2 are provided (as described above with reference to Figure 4). As mentioned the case of two probabilistic models is explained for simplicity but in other embodiments more than two probabilistic models are provided, and the ways in which the method may be varied in this case are explained below.

In step S603, at least one interface node is determined. In general, an interface node is a node that is associated with a variable that is common to both models 1, 2. The term "interface" is used to capture the notion that these nodes provide points where the two models 1, 2 can exchange intermediate data during distributed inference, as described below with reference to Figure 10.

The interface node(s) may be determined by comparing the two models 1, 2 (i.e. in particular by comparing the variables associated with the nodes of each model) and identifying nodes associated with corresponding variables describing the same concept. Such corresponding variables ("common variables") may have the same name and are therefore readily identified (e.g. the "localised defocus" nodes of models 1, 2). However, the two parties may (when creating their models) select different names for variables which describe the same concept. In this cases, identifying that two variables describe the same concept is harder. To reduce the risk of failing to identify variables describing the same concept, the parties may implement any one or any combination of the following measures.

The parties may follow a common naming policy. For example, the naming policy may provide a ruleset that variable names must follow (e.g. capitalization, spacing).

The parties may select the variable names from a predefined list (or dictionary) of allowed variable names.

The corresponding variables may be identified as describing the same concept when they meet a similarity criterion. For example, the similarity criterion may be determined to be met when a sematic analysis of the respective variables indicates that the variables describe the same concept (although their respective text strings may not identical). As another example, the similarity criterion may be determined to be met when two variables have names that are comprised in a predefined list which specifies multiple allowed names for the same concept. As another example, each party may store for each variable, keywords describing the concept captured by the variable, and the similarity criterion may be determined to be met when the number of keywords common to two variables exceeds a predefined threshold.

Each party may inform the other party of variable names that they expect the other party to include in their model, allowing the parties to select or update their variable names accordingly (i.e. to match the expectation of the other party).

However, none of the above ways of reducing the risk of failing to identify variables describing the same concept may be necessary since the parties (although having expertise in different aspects of the production system) frequently employ a common set of notions with an established vocabulary. Thus, interface nodes tend to be part of these common concepts, where nomenclature, measurement units, and others are standardised, without needing to maintain an explicit "knowledge base" available to all parties. Conversely, the other nodes typically represent concepts in which only the individual party has enough expertise to formally model the concept. Nevertheless, in cases with a large number of nodes and/or a large number of parties, the above described measures can mitigate the risk of failing to identify variables describing the same concept.

It is desirable to identify the interface node(s) without explicitly sharing the variable names or any associated description with the other party. Any suitable and known method may be used to do so. More specifically, a private set intersection process may be performed to determine the interface node(s). In general, private set intersection processes are well-known computational techniques that allow two parties holding respective sets of elements to compare encrypted versions of these sets (e.g. the sets may be encrypted using a homomorphic encryption method) to compute the elements that are common to both sets. In particular, private set intersection processes allow the computation of the common elements in a way that neither party reveals anything to the other party except for the common elements.

Thus, for the example network 1,2, the "localised defocus" nodes 7, 19 are determined as interface nodes in step S603. Further, the "OVL" nodes 11, 21 are also determined as interface nodes in step S603.

Next, in step S605, the models 1, 2 are modified (i.e. "synchronised") based on the interface nodes determined in step S603 to form the corresponding synchronised models 71, 72 shown in Figure 8. More specifically, in step S605 each interface node of each model 1, 2 is associated with a partial CPT of the respective common variable so that these partial CPTs collectively specify a probability distribution of the state of the respective common variable.

One way of implementing step S605 of Figure 6 is described in the following with reference to the flow diagram of Figure 7. The process of Figure 7 may be performed for each identified common variable. In step S701, a union of the parent nodes of each corresponding interface node is determined. More specifically, it is determined whether corresponding interface nodes in the models 1, 2 have parent nodes associated with different variables. Similar to the step of determining the interface nodes, the relevant parent nodes are determined in a privacy preserving manner.

For example, with regard to the common variable "localised defocus", it may be determined in step S701 that node 7 of the first model 1 does not have a "wafer table oxidation" parent node (unlike the corresponding node 19 of the second model 2), and that node 19 of the second model 1 does not have a "bad pillar patterning" parent node (unlike the corresponding node 7 of the first model). Further, with regard to the common variable "OVL", it may be determined that the OVL node 11 of the first model 1 does not have a "wafer load grid" parent node (unlike the corresponding node 21 of the second model 2).

In step S703, at least one additional node may be provided to at least one of the two models so that the parent nodes of corresponding interface nodes in each model are respectively associated with the same variables (the added nodes are also referred to as "remote nodes"). It is to be understood that in cases where the parent nodes of corresponding interface nodes in each model are the same, no additional node may be added for this interface node.

For example, based on the "missing" parent nodes identified in step S701, the equipment vendor party may provide to the operator party two remote nodes, a "wafer table oxidation" remote node R1 (as parent of the "localised defocus" node 25) and a wafer load grid remote node R2 (as parent of the "OVL" node 27). Similarly, the operator party may provide to the equipment vendor party a "bad pillar patterning" remote node R3 (as parent of the "localised defocus" node 23). As shown in Figure 8, in the synchronised models 71, 72, the corresponding interface nodes have corresponding parent nodes.

It is desirable to minimise the amount of information shared by the parties when providing the remote nodes. To this end, the remote nodes may be provided without dependencies on parent nodes, as shown in Figure 8 (i.e. a party may remove any dependencies before providing the remote node). Further, the remote node may be provided without any associated (conditional) probability table. Thus, the remote node may, generally, (only) comprise identifiers specifying a definition of the corresponding variable (e.g. the variable name or a keyword description) and the corresponding set of states (i.e. the possible states for the variable), e.g. so that the model receiving the remote node can restructure its interface node as described below with reference to step S705.

Further, the remote nodes may be provided so that the identifiers specifying a definition of the variable and the corresponding set of states are masked (e.g. so that the identifiers are not provided as plaintext). The identifiers may be masked (or obfuscated) by applying a masking operation to the corresponding unmasked identifiers. The masking operation may comprise receiving the identifiers as a text string and masking the received text string by mapping the received text string to a masked representation (e.g. using a hash function). The mapping operation may be a one-to-one mapping between the identifiers and the masked representation.

In embodiments with more than two parties, remote nodes are (only) provided to relevant parties, i.e. to parties with models having the corresponding interface node. Thus, in this case, parties that do not model the corresponding variable receive no information about the remote nodes (i.e. not even the masked remote nodes).

In step S705, the CPTs of the interface nodes are restructured based on remote nodes added in step S703 (i.e. the CPTs of the interface nodes are restructured to take the dependencies on the newly added parent nodes/variables into account).

With reference to Figures 9A and 9B, the steps S705 to S713 are described for the localised defocus variable. For the sake of clarity, the variables in this example are binary variables and the identifiers associated with the remote nodes are shown unmasked (i.e. in plaintext). Figure 9A shows initial (i.e. unsynchronised) CPTs of nodes 7 and 19 of the "unsynchronised" first and second model 1, 2 of Figure 4. Table 91 represents the CPT of node 7 of the first model 1 which specifies the probabilities of a localised defocus being present (D = 1) or not (D = 0) depending on whether a bad pillar patterning is present (B = 1) or not (B = 0). Similarly, table 93 represents the CPT of node 19 of the second model 2 which specifies the probabilities of a localised defocus being present (D = 1) or not (D = 0) depending on whether a wafer table oxidation is present (W = 1) or not (W = 0). In step S705, both CPTs are expanded to take into account the dependency of the common variable on the variables associated with the newly provided remote nodes. The expanded CPTs 95 and 97 are shown in Figure 9A. Thus, at this stage, the expanded CPTs 95, 97 have corresponding rows and columns, but (typically) different entries (i.e. different numerical values in corresponding cells).

In step S707, the entries of the expanded CPTs are (element-wise) raised to the power 1/k where k is the number of parties that model the corresponding common variable. Thus, in a two-party case (i.e. k=2), the entries of the expanded CPTs are (element-wise) raised to the power ½. Figure 9A shows the correspondingly modified tables 99, 101.

In step S709, a normalisation factor is determined for each column of the expanded CPT (i.e. for each combination of states of the parent nodes of the respective interface node) based on the CPTs of the corresponding interface nodes. Each normalisation factor may be derived as a sum of the element-wise products of the respective rows of the modified CPTs after step S707. For example, the normalisation factor of the first column of the modified CPTs 99, 101 of Figure 9A may be determined to be 0.547 ∗ 0.894 + 0.836 ∗ 0.447 = 0.862.

It is desirable that the normalisation factors are computed in a privacy preserving manner. To this end, step S709 may be implement using a homomorphic encryption method (or any other known and suitable cryptographic technique). In general, homomorphic encryption methods refer to encryption methods that allow mathematical operations to be performed on encrypted data without requiring access to a secret key (i.e. a key that was used to encrypt the data). In particular, applying mathematical operations on homomorphically-encrypted data results in data that is in an encrypted form and, when decrypted, result in an output that is identical to that produced had the operations been performed on the unencrypted data.

In step S711, the normalisation factor is applied to the modified CPTs. In particular, the determined normalisation factors may be applied by dividing the elements of the modified CPTs by the k-th root of the corresponding normalisation value (as before, k is the number of parties that model the corresponding common variable). Thus, in a two-party case, the elements of the modified CPTs are divided by the square root of the respective normalisation factor. Figure 9B shows correspondingly modified tables 103, 105 (i.e. tables 103, 105 of Figure 9B correspond to the tables 99, 101 of Figure 9A after S711 has been performed).

At this stage, the initial CPTs of the common variable(s) have been modified such that a complete CPT of the common variable(s) is computable as the element-wise product of the corresponding modified CPTs. For example, the probability of D=0 given B=0 and W = 0 can be computed by computing the product of the element 102 of table 101 and element 104 of table 103, i.e. 0.589 ∗ 0.962 = 0.566. However, the so-modified CPTs are not directly shared among the parties since this would allow one party to be able to compute the other party's initial CPT.

In step S713, element-wise factorisation of the CPTs normalised in step S711 is performed to determine for each element corresponding k factorisation values (k is again the number of parties sharing the common variable). Tables 105, 107 of Figure 9B illustrate the factorisation for the two-party example, e.g. for element 109 of table 105 the factorisation values "a" and "b" are determined (i.e. 0.589 = a ∗ b) and for the corresponding element 111 in table 107 the factorisation values "w" and "z" are determined (i.e. 0.962 = w ∗ x). For each factorization, one of the pair of factorization values (e.g. "a" for the pair "a" and "b") is chosen in any way of which the other parties sharing the common variable is not aware, e.g. at random.

Further in step S713, each party provides to each of the other relevant parties one of the determined factorisation values. Since only one of the factorization values are provided, this information is not sufficient to regenerate the information in tables 101, 103. Using the factorization values it receives, each relevant party can generate a respective (synchronised) partial CPT of the common variable based on the provided factorisation values. Each entry of the partial CPT may be the product of the corresponding factorization value(s) received by the party, and the corresponding factorization value which the party did not transmit. As mentioned above, the corresponding partial CPTs collectively specify a probability distribution of the respective common variable. The tables 113 and 115 of Figure 9B respectively represent the partial CPTs associated with the "synchronised" interface nodes 23 and 25 of the distributed prediction network 70 that is collectively formed by the "synchronised" models 71, 72. In this example, element 117 of table 113 is the product of "a" and "w", and the corresponding element of table 115 is the product of "b" and "x". The partial CPTs generated in S713 maintain product equivalence to the CPTs after step S713 (e.g. the product of the element 102 of table 101 and element 104 of table 103 equals the product of the element 117 of table 113 and element 119 of table 115) but improve the data privacy of parties during inference. Since neither party can compute the complete CPT of a common variable without the partial CPT of the other party, the partial CPTs may be considered to be shares of a secret, namely the complete CPT.

Further, the partial CPTs generated by the process of Figure 7 enable each party to perform local inference to generate "locally conditioned" partial CPT (e.g. using known Bayesian inference methods) which can beneficially be combined with the locally conditioned partial CPT of other parties. Local inference may be performed using available evidence or may be performed without any evidence. For example, each party may condition the locally stored partial CPT associated with a common variable on private evidence (e.g. on measurements that is only available to them) so that such "locally conditioned" partial CPT can still be combined (e.g. by element-wise multiplication) with the corresponding partial CPTs of other relevant parties to generate a complete "conditioned CPT" of the respective common variable (i.e. local conditioning of a partial CPT maintains the correct "normalization" of the partial CPT). This allows each party to obtain a more accurate value for the probability distribution of the states of the common variables (as described below with reference to Figure 10) than if the process of Fig. 7 had not been performed.

The distributed prediction network 70 may allow any party to query for nodes within its local model 71, 72, and may allow further information exchange between the models 71, 72 based on access control rules. In general, the access control rules enable a party to give access to selected nodes and their states to specific other parties, in non-obfuscated form. More specifically, the access rules may specify a node of the respective model that the other model is allowed to query, during inference, to obtain query data comprising conditioned CPT for the variable associated with the node specified in the access rules (this conditioned CPT may be derived by the respective model using observation data). For example, the equipment vendor party may inform the operator party that model 72 of the equipment vendor party comprises a "worn-out wafer table" node 13 and that the model 71 is allowed to query this node during inference. Thus, during inference, the operator party may query the worn-out wafer table node 13 from model 72 and may use the obtained query data derive information characterising the production system. The access rules allow each party to provide tailored and wellcontrolled access to selected other parties in a flexible manner.

Further, the distributed prediction network 70 enables the use of data keys to further improve the prediction accuracy in a privacy preserving manner. A data key may specify a product manufactured by the production system (e.g. batch number of a semiconductor wafer patterned by the lithographic apparatus). Such a data key may be shared, during inference, so that all parties can select observation data (e.g. measurements) based on the data key and can condition their local models on the selected (and potentially private) observation data. Thus, the use of data key enables all parties to use all relevant observations that are available to them without directly sharing the data with the other parties. In an embodiment, data specifying the product manufactured by the production system may be stored in a distributed database and the data key may specify a corresponding entry in the distributed database. Thus, in this embodiment, the parties receiving the data key may retrieve from the database the corresponding data specifying the product manufactured by the production system.

With reference to Figure 10, the use of the distributed prediction network 70 of Figure 8 to derive information characterising a production system is described. In general, Figure 10 describes the aforementioned distributed inference process, i.e. a multi-party probabilistic inference process that is performed in a distributed and privacy protected manner (i.e. so that each party can leverage private/confidential information of the other parties without requiring explicit access to the private/confidential information).

In broad terms, the inference process comprises the calculation, triggered by any party of the distributed prediction network, of posterior probabilities for the states of a set of variables associated with corresponding nodes ("querying a node"), referred to as the query nodes (for clarity, the party that triggers the inference process is referred to as "inquiring party"). The inquiring party may query any node that is present in its network and any other nodes to which it has been given access via the access control rules. Inference is done via local computations by all parties (i.e. by the inquiring party and all parties that have at least one interface node or that allow the inquiring party to query one of their nodes via predefined access rules), with intermediate results being sent to the inquiring party. In this way, inference is distributed, protecting the confidentiality of the knowledge and data. The proposed distributed prediction network also allows the inquiring party to benefit from data that is only accessible to other parties, without exposing the data to the inquiring party. This can be achieved through the use of the abovementioned data keys which identify data specifying a product manufactured by the production system (or a corresponding database entry in a distributed database storing a plurality of data specifying a corresponding plurality of products manufactured by the or a further production system). The other parties can use the data associated with the data key to further identify useful observations to use in their local computations when computing the intermediate data for the inquiring party.

With reference to Figure 10 a process is described where each model 71, 72 uses i) observation data which specifies a state of the variable for at least one node of the model, and ii) the partial CPT in the model of the common variable, to derive conditioned data for the common variable. The conditioned data for the common variable is generated by the two models 71, 72 to collectively specify a probability distribution of the state of the common variable.

More specifically, in an initial step S1001, the inquiring party defines the inquiry, i.e. the inquiring party selects a variable as target variable and a state of the selected variable as target state. The inquiring party may further select observation data upon which the prediction that the target variable is in the target state is based. For example, the equipment vendor party may have identified from recent overlay measurements that the quality of the product produced by the production system is problematic (e.g. the product is likely to be defective). As part of a root cause analysis, the equipment vendor party may wish to assess the probability that the wafer-table of the lithographic apparatus is worn-out given the observed overlay measurements, and thus may select as target variable and target state, the "worn-out wafer table" variable associated with node 13 of model 72 and the associated state "worn-out". Steps S1003 to S1009 describe how the posterior probabilities for node 13 of model 72 can be computed in a distributed and privacy preserving manner.

In step S1003, the inquiring party performs local inference based on available observations, i.e. the model of the inquiring party is conditioned on the observation data available to the inquiring party. This means that the observation data which specifies the state of the variable for at least one of the (evidence) nodes is used to "fix" the corresponding variables, and that the posterior probabilities for the other relevant nodes (i.e. relevant for computing the posterior probabilities of the target variable) is computed based on the fixed evidence nodes. The posterior probabilities may be computed using any suitable, known method (e.g. Bayesian inference methods). To continue with the above example, the variable of the OVL node 21 of model 72 is fixed based on the overlay data available to the equipment vendor party, and the posterior probabilities of nodes 13, 15, 17, 23 of model 72 are computed (i.e. also the partial CPT of the "localised defocus" node 23 is conditioned on the OVL data).

In step S1005, the model of the inquiring party queries the other models for conditioned data for the common variable(s). The query may comprise a data key specifying the problematic product. For example, the model 72 of the equipment vendor party queries conditioned data for the "localised defocus" variable.

Then, in step S1007, the queried models perform local inference based on observations available to them, i.e. each of queried models is conditioned on the observation data available to the respective party. The parties of the queried models may have the same observation data available as the inquiring party. Additionally or alternatively the parties of the queried models may have different (e.g. further) observation data (i.e. observation data that is different from the observation data available to the inquiring party). This means that the state of the variable for at least one of the (evidence) nodes of each queried model is derived based on the respectively available observation, and that the posterior probabilities for the other relevant nodes (i.e. relevant for computing the posterior probabilities of the target variable) is computed based on the fixed evidence nodes. In particular, each of the queried models generates conditioned data for the common variable(s) using the corresponding partial CPT of the respective model and at least one of the derived states for the respective model (e.g. the states of the child node(s) to the interface node in the respective model). To continue with the above example, the operator party may use the received data key to determine that relevant critical dimension measurements are available to them. The CD node 9 of the operator model 71 may then be conditioned based on the critical dimension measurements available to the operator party, and the posterior probabilities of nodes 3, 5, 25 of model 71 are computed (i.e. also the partial CPT of the "localised defocus" node 25 is conditioned on the CD data).

In general, it is to be understood that steps S1003, S1005, S1007 do not need to be performed in the specific order illustrated in Figure 10 and described above. In embodiments, step S1003 may be performed concurrently to (or after) steps S1005 and S1007. Further, in some embodiments, the local inference steps S1003 and S1007 may be performed without observation data (i.e. without evidence).

In step S1009, the inquiring model receives the conditioned data (i.e. the conditioned partial CPTs of the interface nodes) from the queried parties, and determines a probability of the target variable being in the target state based on the locally computed posterior probabilities and the received conditioned data. In other words, the inquiring model combines the received conditioned data (which represent "intermediate data" since the conditioned data relates to the interface nodes and does not directly specify the posterior probabilities of the target variable) with the local inference results to obtain improved inference results (i.e. inference results that benefit from the knowledge available to the queried models). To this end, the inquiring model may perform (at least) a multiplication of the received conditioned data and the locally conditioned data for each common variable (i.e. the product of the local CPT with locally available state data (e.g. the states of the child nodes to the inference nodes for which conditioned data was received)), to obtain the "final" probability distribution of the state of the respective common variable. Performing this multiplication may comprise generating each element of the output by multiplying a corresponding element of the received conditioned data with a corresponding element of the locally conditioned data (i.e. with an appropriately selected element of the locally conditioned data). Note that, depending upon how the received conditioned data, and the locally conditioned data are formatted, the positions of the two elements may not be the same within the two datasets (e.g. a third element of the output dataset might be the multiplication product of the first and third elements respectively of the two data inputs). Based on the so-derived probability distributions of common variables, the other relevant nodes (including the target node) may be updated (e.g. using Bayesian inference methods). To continue with the above example, the operator model 72 may perform a (element-wise) multiplication of the conditioned partial CPT of the "localised defocus" node 25 received from the operator model 71 and the locally conditioned partial CPT of the "localised defocus" node 23 to derive a "final" conditioned CPT for the "localised defocus" variable. The operator model 72 may then use this final conditioned CPT for the "localised defocus" variable to derive updated posterior probabilities for node 15 and the target node 13.

The provision of intermediate results (i.e. the conditioned data) allows the inquiring party to reconstruct the final prediction of the state of the target variable as if the inquiring party had access to the "global" model of Figure 5 - without explicitly building the global model which, as described above, requires sharing of (confidential) information. Thus, the distributed prediction network 70 described above allows the inquiring party to benefit from the knowledge and data of the other parties in a privacy preserving manner. The improved privacy over conventional "global" networks, such as the one shown in Figure 5, may be further understood by considering the number of exposed edges and CPTs. For example, at the structure level, a simple metric is the exposed edges quotient ($Q_{edge}$) which may be defined as

$$\mathrm{Qedge} \ = \ N_{\mathrm{remote\_edges}} \ / \ N_{total\_edges}$$

where with $N_{remote\_edges}$ is the number of edges that are remote in any party, and $N_{total\_edges}$ the total number of edges. A complementary metric at the parameter level is the exposed distribution quotient ($Q_{CPT}$):

$$Q_{\mathrm{CPT}} \ = \ N_{\mathrm{shared\_CPT}} \ / \ N_{\mathrm{total\_CPT}}$$

where $N_{shared\_CPT}$ is the number of CPTs shared with any parties, and $N_{total\_CPD}$ the total number of CPTs.

For the above defined metrics, the best achievable value is 0, which means that no extra information is exchanged between any parties, while a value of 1 indicates the least private configuration since this means that at least one party has all structure and parameter information.

The parameter $Q_{edge}$ can be evaluated for the distributed prediction network 70 of Figure 8 by simply counting the relevant edges, resulting in $Q_{edge}$ score of 3/8. In comparison, the corresponding global network of Figure 5 (e.g. created in a centralised approach where parties send their full networks to a coordinator which performs the combination and distributes the result back to all) has the worst possible $Q_{edge}$ score of 1. As mentioned above to further prevent unintended information leakage, the name and states of remote edges are stored in an obfuscated form. With regard to the $Q_{CPT}$ parameter, the invention achieves the best possible score of 0, while the conventional network once again has the worst possible score of 1. While the precise values for the two metrics depend on the topologies of the input networks, the above described distributed prediction network typically performs better than a conventional global network.

Further embodiments of the invention are disclosed in the list of numbered clauses below:

0. A computer-implemented method of using a distributed prediction network to derive information characterising a production system described by a plurality of variables; the prediction network comprising at least two probabilistic models, each model implementing a respective graph, each graph comprising a plurality of nodes which are each associated with a corresponding one of the variables, and a plurality of directed edges connecting respective pairs of the nodes, each plurality of nodes comprising an interface node which is a node for which the corresponding associated variable is a common variable that is common to both models, the nodes of each plurality of nodes other than the interface node being designated normal nodes, each normal node to which one or more edges are directed being associated with a respective conditional probability table, CPT, specifying a probability of the respective variable being in one of a respective set of states based on the variables associated with the corresponding one or more nodes from which the one or more edges are directed, the interface node being associated with a partial CPT of the common variable; the method comprising each model using the partial CPT in the model of the common variable to derive conditioned data for the common variable, the conditioned data for the common variable generated by the at least two models collectively specifying a probability distribution of the state of the common variable.

1. A computer-implemented method of using a distributed prediction network to derive information characterising a production system described by a plurality of variables, the prediction network comprising at least two probabilistic models, each model implementing a respective graph, each graph comprising a plurality of nodes which are each associated with a corresponding one of the variables, and a plurality of directed edges connecting respective pairs of the nodes, each plurality of nodes comprising an interface node which is a node for which the corresponding associated variable is a common variable that is common to both models, the nodes of each plurality of nodes other than the interface node being designated normal nodes, each normal node to which one or more edges are directed being associated with a respective conditional probability table, CPT, specifying a probability of the respective variable being in one of a respective set of states based on the variables associated with the corresponding one or more nodes from which the one or more edges are directed, the interface node being associated with a partial CPT of the common variable, the method comprising: generating, using the at least two models, conditioned data collectively specifying a probability distribution of the state of the common variable, wherein each of the at least two models uses the partial CPT in the model of the common variable.

2. A method according to clause 0 or 1 further comprising: (i) selecting, as a target variable, a variable of a first model of the at least two models and, as target state, a state of the selected variable; (ii) querying, by the first model, the other or others of the at least two models for conditioned data for the common variable; and (iii) determining, by the first model, based on the conditioned data queried from the other or others of the at least two models and the conditioned data in the first model for the common variable, a probability of the target variable being in the target state.

3. The method according to clause 2 wherein determining a probability of the target variable being in the target state comprises: the first model performing a multiplication of the conditioned data for each of the models for the common variable, and determining a probability of the target variable being in the target state based on a result of the multiplication.

4. The method according to clause 2 or 3 wherein each model using the partial CPT in the model of the common variable to derive conditioned data for the common variable comprises: the other or others of the at least two models model deriving, based on observation data which specifies a state of the variable for at least one of the nodes, a state for the respective variable for one or more other nodes of the other or others of the at least two models model, and using at least one of the derived states for the respective model and the partial CPT in the respective model of the common variable to derive the conditioned data for the common variable.

5. The method according to clause 4 wherein deriving a state for the respective variable for one or more other nodes of the other or others of the at least two models comprises: providing, by the first model, a data key to the other or others of the at least two models, the data key specifying a product manufactured by the production system;

selecting, by the other or others of the at least two models, the observation data specifying a state of the variable for at least one of the nodes based on the data key; and based on the selected observation data, deriving a state for the respective variable for one or more other nodes of the first model.

6. The method according to any one of clauses 2 to 5, wherein each model using the partial CPT in the model of the common variable to derive conditioned data for the common variable further comprises: the first model deriving, based on observation data which specifies a state of the variable for at least one of the nodes, a state for the respective variable for one or more other nodes of the first model, and using at least one of the derived states for the first model and the partial CPT in the first model of the common variable to derive the conditioned data for the common variable.

7. The method according to any one of clauses 2 to 6 further comprising defining, by the other or others of the at least two models, respective access rules, the respective access rules specifying a node of the respective other or others of the at least two models that the first model is allowed to query to obtain query data comprising conditioned data for the variable associated with the node specified in the access rules,

and wherein determining a probability of the target variable being in the target state comprises: querying, by the first model, the node specified in the access rules, and

determining the probability of the target variable being in the target state based on the conditioned data for each of the models for the common variable and based on the query data.

8. The method according to any preceding clause, wherein the target variable specifies a root-cause of an anomaly in a production process performed by the production system.

9. The method according to clause 8, wherein the target variable specifies a defect of the production system.

10. The method according to any preceding clause, wherein the production system comprises a lithographic apparatus for patterning a semiconductor substrate.

11. The method according to clause 10, wherein the observation data comprises inspection data of a semiconductor substrate patterned by the lithographic apparatus.

12. The method according to clause 11, wherein the inspection data comprises overlay or critical dimension measurements.

13. The method according to any preceding clause in which each of the models comprises a plurality of corresponding interface nodes, the corresponding interface nodes of different ones of the models being associated with a respective common variable, each interface node of each model being associated with a partial CPT of the corresponding common variable; said step of each model deriving conditioned data being performed for each of the interface nodes of each model, using the corresponding partial CPT in the model of the corresponding common variable, to derive conditioned data for the corresponding common variable, the conditioned data for each common variable generated by the at least two models collectively specifying a probability distribution of the state of the common variable.

14. A computer-implemented method of providing a distributed prediction network for implementing the methods of any preceding clauses, the method comprising: (i) providing at least two probabilistic models, wherein: each model implements a respective graph,

each graph comprises a plurality of nodes associated with corresponding variables, and a plurality of directed edges connecting respective pairs of the nodes, for each of the directed edges, the corresponding node from which the edge is directed is designated a parent node and the corresponding node to which the edge is directed is designated a child node, and each child node is associated with a respective conditional probability distribution, CPT,

specifying a probability of the respective variable being in one of a respective set of states based on the variables associated with the one or more corresponding parent nodes, (ii) determining an interface node by associating a node in each of the at least two models for which the corresponding variables meet a similarity criterion; and (iii) associating, for each of the at least two models, the interface node with a partial CPT of the common variable so that the partial CPTs of the common variable in the at least two models collectively specify a probability distribution of the state of the common variable.

15. A method according to clause 14 in which the step of determining an interface node is performed by a private set intersection process.

16. The method according to clause 14 or 15, wherein associating, for each of the at least two models, the interface node with a partial CPT of the common variable comprises: for each of the at least two models, performing, for the interface node, element-wise factorisation of a respective CPT to determine for each element corresponding at least two factorisation values; for each of the at least two models, providing to each of the other models of the at least two models, for the interface node, a respective factorisation value of the corresponding at least two factorisation values; and

for each of the at least two models, generating for the interface node a partial CPT of the common variable based on the provided factorisation values.

17. The method according to any of clauses 14 to 16 further comprising providing at least one additional node to one or more of the at least two models so that the parent nodes of the interface node in each model are respectively associated with the same variables.

18. The method according to clause 17, wherein identifiers specifying a definition of the variable and the corresponding set of states associated with the at least one additional node, are masked by applying a masking operation to the corresponding unmasked identifiers.

19. The method according to clause 17 or 18, wherein performing element-wise factorisation of a respective CPT to determine for each element corresponding at least two factorisation values comprises: restructuring the CPT of the interface node based on the at least one additional node; using a homomorphic encryption method to determine, based on the CPTs of the interface node, a normalisation factor for each combination of states of the parent nodes of the interface node; applying the normalisation factors to the CPTs of the interface node; and for each normalised CPT, performing element-wise factorisation to determine for each element the corresponding at least two factorisation values.

20. A computing system comprising one or more processors configured to implement the method according to any one of clauses 0-19.

21. A computer readable medium comprising executable instructions that, when executed by a processor, cause the processor to implement the method according to any one of clauses 0-19.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquidcrystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

## Claims

1. A computer-implemented method of using a distributed prediction network to derive information characterising a production system described by a plurality of variables, the prediction network comprising at least two probabilistic models, each model implementing a respective graph, each graph comprising a plurality of nodes which are each associated with a corresponding one of the variables, and a plurality of directed edges connecting respective pairs of the nodes, each plurality of nodes comprising an interface node which is a node for which the corresponding associated variable is a common variable that is common to both models, the nodes of each plurality of nodes other than the interface node being designated normal nodes, each normal node to which one or more edges are directed being associated with a respective conditional probability table, CPT, specifying a probability of the respective variable being in one of a respective set of states based on the variables associated with the corresponding one or more nodes from which the one or more edges are directed, the interface node being associated with a partial CPT of the common variable, the method comprising: generating, using the at least two models, conditioned data collectively specifying a probability distribution of the state of the common variable, wherein each of the at least two models uses the partial CPT in the model of the common variable.

2. A method according to claim 1 further comprising:

(i) selecting, as a target variable, a variable of a first model of the at least two models and, as target state, a state of the selected variable;
(ii) querying, by the first model, the other or others of the at least two models for conditioned data for the common variable; and
(iii) determining, by the first model, based on the conditioned data queried from the other or others of the at least two models and the conditioned data in the first model for the common variable, a probability of the target variable being in the target state.

3. The method according to claim 2 wherein determining a probability of the target variable being in the target state comprises:

using the first model to perform a multiplication of the conditioned data for each of the models for the common variable; and
determining a probability of the target variable being in the target state based on a result of the multiplication.

4. The method according to claim 2 or 3, wherein each model using the partial CPT in the model of the common variable to derive conditioned data for the common variable comprises:

the other or others of the at least two models model deriving, based on observation data which specifies a state of the variable for at least one of the nodes, a state for the respective variable for one or more other nodes of the other or others of the at least two models model, and using at least one of the derived states for the respective model and the partial CPT in the respective model of the common variable to derive the conditioned data for the common variable.

5. The method according to claim 4 wherein deriving a state for the respective variable for one or more other nodes of the other or others of the at least two models comprises:

providing, by the first model, a data key to the other or others of the at least two models, the data key specifying a product manufactured by the production system;
selecting, by the other or others of the at least two models, the observation data specifying a state of the variable for at least one of the nodes based on the data key; and
based on the selected observation data, deriving a state for the respective variable for one or more other nodes of the first model.

6. The method according to any one of claims 2 to 5, wherein each model using the partial CPT in the model of the common variable to derive conditioned data for the common variable further comprises:
the first model deriving, based on observation data which specifies a state of the variable for at least one of the nodes, a state for the respective variable for one or more other nodes of the first model, and using at least one of the derived states for the first model and the partial CPT in the first model of the common variable to derive the conditioned data for the common variable.

7. The method according to any one of claims 2 to 6 further comprising defining, by the other or others of the at least two models, respective access rules, the respective access rules specifying a node of the respective other or others of the at least two models that the first model is allowed to query to obtain query data comprising conditioned data for the variable associated with the node specified in the access rules,
and wherein determining a probability of the target variable being in the target state comprises:

querying, by the first model, the node specified in the access rules, and
determining the probability of the target variable being in the target state based on the conditioned data for each of the models for the common variable and based on the query data.

8. The method according to any preceding claim, wherein the target variable specifies a root-cause of an anomaly in a production process performed by the production system.

9. The method according to claim 8, wherein the target variable specifies a defect of the production system.

10. The method according to any preceding claim, wherein the production system comprises a lithographic apparatus for patterning a semiconductor substrate.

11. The method according to claim 10, wherein the observation data comprises inspection data of a semiconductor substrate patterned by the lithographic apparatus.

12. The method according to claim 11, wherein the inspection data comprises overlay or critical dimension measurements.

13. The method according to any preceding claim in which each of the models comprises a plurality of corresponding interface nodes, the corresponding interface nodes of different ones of the models being associated with a respective common variable, each interface node of each model being associated with a partial CPT of the corresponding common variable;

said step of each model deriving conditioned data being performed for each of the interface nodes of each model, using the corresponding partial CPT in the model of the corresponding common variable, to derive conditioned data for the corresponding common variable,
the conditioned data for each common variable generated by the at least two models collectively specifying a probability distribution of the state of the common variable.

14. A computer-implemented method of providing a distributed prediction network for implementing the methods of any preceding claims, the method comprising:

(i) providing at least two probabilistic models, wherein:

each model implements a respective graph, each graph comprises a plurality of nodes associated with corresponding variables, and a plurality of directed edges connecting respective pairs of the nodes, for each of the directed edges, the corresponding node from which the edge is directed is designated a parent node and the corresponding node to which the edge is directed is designated a child node, and

each child node is associated with a respective conditional probability distribution, CPT, specifying a probability of the respective variable being in one of a respective set of states based on the variables associated with the one or more corresponding parent nodes,
(ii) determining an interface node by associating a node in each of the at least two models for which the corresponding variables meet a similarity criterion; and
(iii) associating, for each of the at least two models, the interface node with a partial CPT of the common variable so that the partial CPTs of the common variable in the at least two models collectively specify a probability distribution of the state of the common variable.

15. A computer readable medium comprising executable instructions that, when executed by a processor, cause the processor to implement the method according to any one of claims 1 to 14.

# Fig. 1

# Fig. 2

# Fig. 3

# Fig. 4

```
┌──────────────┐                                    ┌──────────────────┐
│ Sub-optimal  │                                    │ Worn-out wafer   │
│ Etch 3       │                                    │ table 13         │
└──────────────┘                                    └──────────────────┘
       │                                                   │        │
       ▼           ⟍ 1              2 ⟋                    ▼        │
┌──────────────┐                          ┌──────────────────┐     │
│ Bad pillar   │                          │ Wafer table      │     ▼
│ patterning 5 │                          │ oxidation 15     │  ┌──────────────┐
└──────────────┘                          └──────────────────┘  │ Wafer load   │
       │                                        │               │ grid 17      │
       ▼                                        ▼               └──────────────┘
┌──────────────┐                          ┌──────────────┐            │
│ Localised    │                          │ Localised    │            │
│ defocus 7    │                          │ defocus 19   │            │
└──────────────┘                          └──────────────┘            │
    │      │                                     │                    │
    ▼      ▼                                     ▼                    ▼
┌──────┐ ┌────────┐                          ┌──────────────┐
│ CD 9 │ │ OVL 11 │                          │ OVL 21       │
└──────┘ └────────┘                          └──────────────┘
```

# Fig. 5

# Fig. 6

providing (at least) two probabilistic models    S601

determining an interface node by associating a node in each of the provided models for which the corresponding variables meet a similarity criterion    S603

associating, for each of the at least two models, the interface node with a partial CPT of the common variable    S605

# Fig. 7

determining a union of the interface node's parents    S701

adding remote nodes    S703

restructuring the CPT of the interface node in interfacing parties    S705

raising the CPT entries to the power 1/k, where k is the number of parties that model the corresponding common variable)    S707

determining a normalisation value for each CPD column    S709

dividing CPT columns by the k-th root of the corresponding normalisation value    S711

performing element-wise factorisation of CPTs and generating synchronised, partial CPTs    S713

# Fig. 8

# Fig. 9A

91

| | B = 0 | B = 1 |
|---|---|---|
| D = 0 | 0.3 | 0.2 |
| D = 1 | 0.7 | 0.8 |

93

| | W = 0 | W = 1 |
|---|---|---|
| D = 0 | 0.8 | 0.1 |
| D = 1 | 0.2 | 0.9 |

95

| | B = 0<br>W = 0 | B = 0<br>W = 1 | B = 1<br>W = 0 | B = 1<br>W = 1 |
|---|---|---|---|---|
| D = 0 | 0.3 | 0.3 | 0.2 | 0.2 |
| D = 1 | 0.7 | 0.7 | 0.8 | 0.8 |

97

| | B = 0<br>W = 0 | B = 0<br>W = 1 | B = 1<br>W = 0 | B = 1<br>W = 1 |
|---|---|---|---|---|
| D = 0 | 0.8 | 0.1 | 0.8 | 0.1 |
| D = 1 | 0.2 | 0.9 | 0.2 | 0.9 |

99

| | B = 0<br>W = 0 | ... |
|---|---|---|
| D = 0 | 0.3^(1/2) = 0.547 | ... |
| D = 1 | 0.7^(1/2) = 0.836 | ... |

101

| | B = 0<br>W = 0 | ... |
|---|---|---|
| D = 0 | 0.8^(1/2) = 0.894 | ... |
| D = 1 | 0.2^(1/2) = 0.447 | ... |

# Fig. 9B

101

| | B = 0<br>W = 0          102 | … |
|---|---|---|
| D = 0 | 0.547 / 0.862^(1/2) = 0.589 | … |
| D = 1 | 0.836 / 0.862^(1/2) = 0.900 | … |

103

| | B = 0<br>W = 0          104 | … |
|---|---|---|
| D = 0 | 0.894 / 0.862^(1/2) = 0.962 | … |
| D = 1 | 0.447 / 0.862^(1/2) = 0.481 | … |

105

| | B = 0<br>W = 0          109 | … |
|---|---|---|
| D = 0 | 0.589 = a * b | … |
| D = 1 | 0.900 = c * d | … |

107

| | B = 0<br>W = 0          111 | … |
|---|---|---|
| D = 0 | 0.962 = w * x | … |
| D = 1 | 0.481 = y * z | … |

113

| | B = 0<br>W = 0          117 | … |
|---|---|---|
| D = 0 | a * w | … |
| D = 1 | c * y | … |

115

| | B = 0<br>W = 0          119 | … |
|---|---|---|
| D = 0 | b * x | … |
| D = 1 | d * z | … |

# Fig. 10

Queried Party | Inquiring Party

Selecting a target variable —S1001

deriving a state of a variable based on observation data —S1003

querying conditioned data for the common variable(s) —S1005

S1007

deriving a state of a variable based on observation data

Determining a probability of the target variable being in the target state —S1009

Europäisches
Patentamt

European
Patent Office

Office européen
des brevets

# EUROPEAN SEARCH REPORT

**Application Number**

EP 23 20 2791

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VELIKOVA MARINA ET AL: "Assisted Diagnostics Methodology for Complex High-Tech Applications", 2019 4TH INTERNATIONAL CONFERENCE ON SYSTEM RELIABILITY AND SAFETY (ICSRS), IEEE, 20 November 2019 (2019-11-20), pages 457-463, XP033708648, DOI: 10.1109/ICSRS48664.2019.8987704 [retrieved on 2020-02-07] * the whole document * | 1-15 | INV. G06N7/01 G06N20/00 G06N5/022 |

-----

**TECHNICAL FIELDS SEARCHED (IPC)**

G06N

The present search report has been drawn up for all claims

| Place of search | Date of completion of the search | Examiner |
|---|---|---|
| The Hague | 4 March 2024 | Ntarlagiannis, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................

& : member of the same patent family, corresponding document

EPO FORM 1503 03.82 (P04C01)

**EP 4 538 938 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6952253 B